Europäisches Patentamt

(19) European Patent Office

Office européen des brevets

(11) Publication number: **0 241 910 B1**

# (12) EUROPEAN PATENT SPECIFICATION

(45) Date of publication of patent specification: **09.10.91**

(51) Int. Cl.⁵: **B01D 53/04**, C10K 1/32, C01B 31/18

(21) Application number: 87105509.1

(22) Date of filing: 14.04.87

(54) Process for separating carbon monoxide having substantially constant purity.

(30) Priority: 14.04.86 JP 84236/86

(43) Date of publication of application:
**21.10.87 Bulletin 87/43**

(45) Publication of the grant of the patent:
**09.10.91 Bulletin 91/41**

(84) Designated Contracting States:
**BE DE FR GB NL**

(56) References cited:
**US-A- 4 539 020**
**US-A- 4 594 080**

(73) Proprietor: **Osaka Sanso Kogyo Limited**
**1-14, Miyahara 4-chome**
**Yodogawa-ku Osaka(JP)**

Proprietor: **KAWASAKI STEEL CORPORATION**
**1-28, 1-chome, Kitahonmachidori**
**Chuo-ku Kobe-shi Hyogo-651(JP)**

(72) Inventor: **Koizumi, Susumu Mizushima Works**
**Kawasaki Steel Corp. Mizushima-**
**Kawasaki-Dori**
**1-Chome Kurashiki City Okayama Pref.(JP)**
Inventor: **Matsui, Shigeo**
**3-4-5,Tanakamachi Higashinada-Ku Kobe-Shi**
**Hyogo-ken(JP)**
Inventor: **Kawata, Kyoichi Osaka Sanso**
**Sakaidokushinryo 502**
**1-16-6, Toriishi Takaishi-shi**
**Osaka(JP)**

(74) Representative: **Henkel, Feiler, Hänzel & Part-**
**ner**
**Möhlstrasse 37**
**W-8000 München 80(DE)**

## Description

The present invention relates to a process for obtaining carbon monoxide having substantially constant purity from a feed gas, such as off-gases from a converter furnace or a blast furnace, containing at least carbon dioxide, carbon monoxide and nitrogen by pressure swing adsorption (PSA). The carbon monoxide recovered according to the present invention can be used as a raw material for chemical processes.

A process for separating carbon monoxide from a feed gas containing CO, $CO_2$ and $N_2$ by using PSA in a two-state adsorption process is disclosed in US -A- 4,539,020 dated September 3, 1985 by Sakuraya et al. According to the process disclosed in US -A- 4,539,020, as the concentration of CO in the feed gas changes, the purity of CO in the product gas also changes.

When off-gas from a converter furnace is used as a starting material gas for chemical process, the concentration of CO in the off-gas changes with time. So, it is difficult to continuously obtain CO having substantially constant purity in a high yield.

If the feed gas is a by-product gas such as a converter off-gas, its composition will vary unavoidably with time. The concentration of the feed gas is generally in proportion to the concentration of the product gas. The converter gas typically contains a CO gas at a concentration which generally ranges from about 70 to 80%. From this gas, CO with a purity of about 98% will be produced. The concentration of CO in the converter gas will sometimes fall to about 50% and the purity of CO in the product gas will correspondingly fall to 96 - 97%. Such a drop in the purity of CO in the product gas will cause a serious effect in the case where the purified CO is intended to be used in a chemical process. In a specific case where the pipe for conveying the product gas recovered from the apparatus used in the practice of the method of the present invention is connected to a chemical reactor, the operation of the reactor has to be stopped if the drop in the purity of the product CO gas is excessive.

If the concentrating apparatus is designed to meet the lower limit of the possible variation in the concentration of CO in the feed gas, say 50%, the product gas will always have a certain minimum level of CO purity. However, if the concentration of CO in the feed gas rises to 70 - 80%, the electric power used to operate the apparatus will be mostly wasted.

An object of this invention is to provide a process for continuously obtaining CO product with substantially constant purity from a CO, $CO_2$ and $N_2$-containing feed gas by two-state adsorption through PSA.

This invention relates to a process for separating carbon monoxide with substantially constant purity from a feed gas containing at least carbon dioxide, carbon monoxide and nitrogen through pressure swing adsorption (PSA) in a two-state adsorption operation which comprises a first adsorption stage and a second adsorption stage wherein:

(1) the first adsorption stage comprises pressure swing adsorption whereby adsorption and desorption are alternated by using at least two adsorption columns containing an adsorbent exhibiting a selective adsorbing property relative to carbon dioxide in order to remove carbon dioxide from said feed gas; and

(2) the second adsorption stage comprises a process for separating carbon monoxide from the gaseous mixture which has been withdrawn from the first adsorption stage through PSA by using at least two adsorption columns containing an adsorbent exhibiting a selective adsorbing property relative to carbon monoxide;

the second adsorption stage repeating at least a step of pressurizing the column, a step of adsorbing carbon monoxide, and a step of desorbing the carbon monoxide, characterized in that the CO concentration in the feed gas, the CO concentration in the effluent gas withdrawn from the first adsorption stage, or the CO concentrations in both gases are monitored, and when the CO concentration in the feed gas or effluent gas decreases below a definite amount, part of the CO product gas is circulated into the feed gas, the effluent gas, or both gases.

According to the present invention, carbon monoxide with substantially constant purity can be obtained continuously. The purity of the CO product gas recovered is not proportional to the CO concentration in the feed gas.

Figs. 1 - 3 are flowsheets showing preferable forms of apparatus for this invention;
Fig. 4 is a graph showing changes in the amounts of CO, $CO_2$ and $N_2$ with time; and
Fig. 5 is a graph showing changes in the amount of product gas with time.

## Key to the symbols

1...feed gas compressor; 2...product gas compressor; 3...vacuum pump for evacuation; 4...vacuum pump for recovering the product gas; 5 - 7...adsorption columns in the PSA apparatus for $CO_2$ removal; 8 -

11...adsorption columns in the PSA apparatus for $N_2$ removal; 12...exhaust gas buffer tank; 13...product gas buffer tank; 14...water-filled holder for product gas; 15 - 32...automatic valves in PSA apparatus for $CO_2$ removal; 33 - 56...automatic valves in PSA apparatus for $N_2$ removal; 57...regulating valve; 58...regulating valve; 59...return gas regulating valve; 60...gas analyzer; 61...computing controller; 62...feed gas flow meter; 63...return gas flow meter; 64...pipe through which the product gas is returned to the feed gas; 65...pipe through which the product gas is returned to the product gas leaving the first stage of purification; 66...regulating valve.

The gas circulation system of this invention is explained in the following:

(i) The CO concentration in the feed gas, the CO concentration in the effluent gas withdrawn from the first staged or the CO concentrations in both gases as well as the flowrate of the feed stream or of the effluent stream from the first adsorption stage are monitored continuously.

(ii) The CO purity in the product gas withdrawn in the second stage is monitored continuously.

(iii) When the CO concentration in the feed gas decreases below a definite amount, for example, 70% by volume, the CO product gas is circulated into the feed gas or the effluent gas withdrawn from the first stage. The amount of the CO product gas circulated is calculated on the basis of the CO concentration in the feed gas or the effluent gas from the first staged and the CO purity of the product gas.

Preferable Embodiment

First stage

The first stage comprises:

(i) a step of pressurizing an adsorption column by said feed;

(ii) a step of introducing said feed gas into the adsorption column in which step (i) has previously been completed so as to adsorb carbon dioxide as a main component on or in the adsorbent;

(iii) a step of depressurizing, preferably countercurrently, the adsorption column in which step (ii) has previously been completed to near one atmospheric pressure;

(iv) a step of evacuating, preferably countercurrently, the column in which step (iii) has previously been completed to 8.0-40.0 KPa (60 - 300 Torr);

(v) a step of purging carbon dioxide, preferably countercurrently, by introducing into the column in which step (iv) has previously been completed the waste gas obtained in the adsorbing step of the second stage; and

(vi) a step of pressurizing, preferably countercurrently, the column in which step (v) has previously been completed by introducing into the column the product gas generated in the first stage; and further periodically switching the flow between said columns so as to repeat the above steps therein.

Second stage

The second adsorption stage comprises a process for separating carbon monoxide from the gaseous mixture which has been withdrawn from the first adsorption stage through PSA by using at least two adsorption columns containing an adsorbent exhibiting a selective absorbing property relative to carbon monoxide which comprises:

(i) a step of pressurizing the adsorption column in which the step (vi) has previously been completed by utilizing the gaseous mixture which has been withdrawn from the first adsorption stage (hereinunder referred to as the first stage product gas);

(ii) a step of introducing the first stage product gas into the adsorption column in which step (i) has previously been completed so as to adsorb carbon monoxide on or in the adsorbent;

(iii) a step of connecting the adsorption column in which step (ii) has previously been completed to the adsorption column in which step (v) has previously been completed in order to reduce the pressure in the former adsorption column and increase the pressure in the latter adsorption column;

(iv) a step of purging components that are less adsorbable than CO by concurrently passing product gas through the adsorption column in which step (iii) has previously been completed;

(v) a step of evacuating the adsorption column in which step (iv) has previously been completed to recover carbon monoxide adsorbed on or in the adsorbent of the adsorption column;

(vi) a step of connecting the adsorption column in which step (v) has previously been completed to the adsorption column in which step (ii) has previously been completed to increase pressure in the former column; and

(vii) a step of pressurizing the column in which step (vi) has previously been completed with the purge gas from the other column; and further

periodically switching the flow between said adsorption columns so as to repeat the above steps therein.

None of the individual steps of the first stage or the second stage are critical. An object of the first stage is to remove $CO_2$ from a feed gas containing at least CO, $CO_2$ and $N_2$. An object of the second stage is to recover CO from the effluent gas containing at least $N_2$ and CO. This invention can be applied to a process comprising various kinds of first stage and various kinds of second stage.

Preferable Embodiment

Example

The method of the present invention is hereinafter described with reference to the case in which it is applied to the purpose of separating and purifying CO from a converter off-gas having the composition of 71% CO, 14% $CO_2$, 13% $N_2$ and 2% $H_2$. The first stage of purification was conducted with a PSA apparatus for $CO_2$ removal consisting of cycles of "adsorption - depressurization - evacuation - purging - product pressurization", and the second stage of purification was conducted with a PSA apparatus for $N_2$ removal consisting of cycles of "pressurization of the product obtained in the first stage - adsorption (I) - depressurization - purging - evacuation - adsorption (II) (recovery by depressurization) - adsorption (III) (recovery by purging)". The PSA apparatus for $CO_2$ removal used in the first stage was packed with activated alumina and carbon, while the PSA apparatus for $N_2$ removal used in the second stage was packed with activated alumina and Zeoharb®. After purification, the product gas had the composition of 98.5% CO, 0% $CO_2$ and 1.5% of $N_2$.

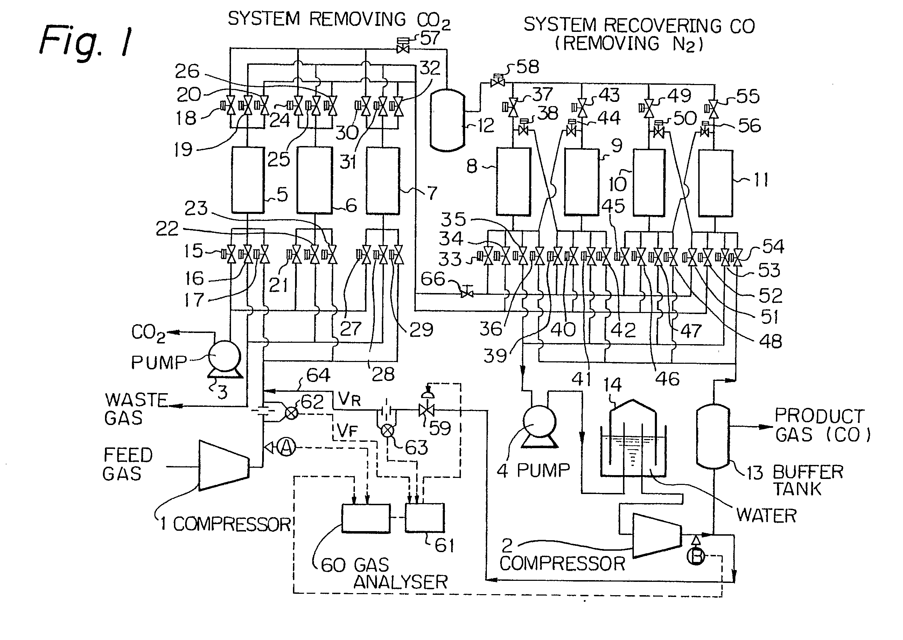

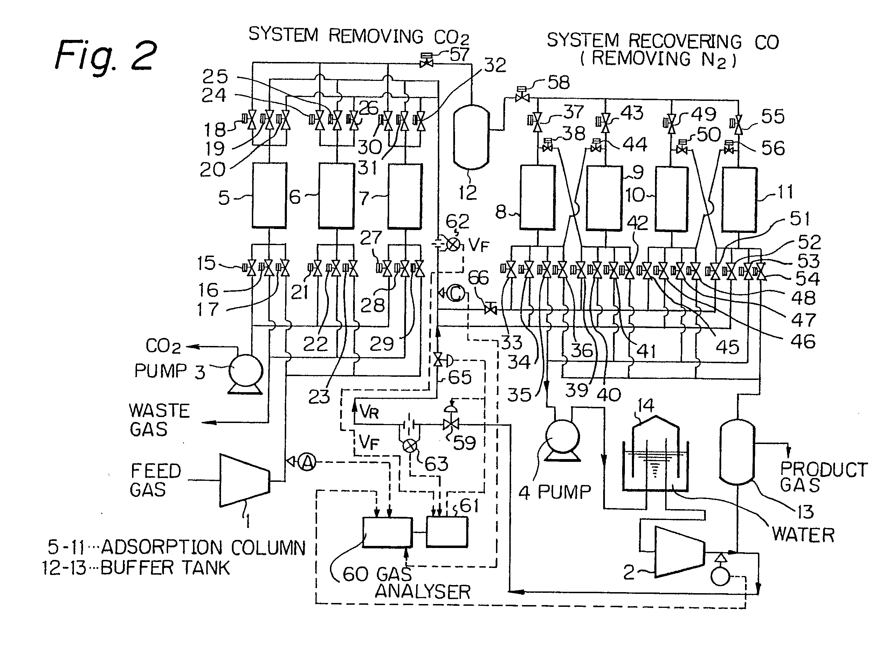

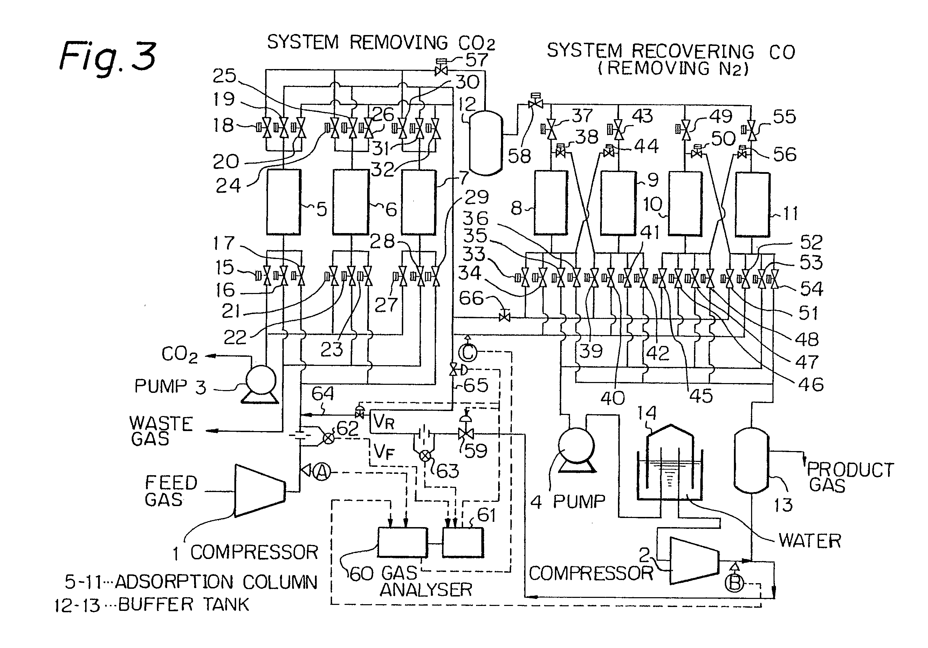

Two basic methods for implementing the process of the present invention are hereunder described; the first method is illustrated in Fig. 1 and the second method is shown in Figs. 2 and 3. The two methods are identical in many respects except for the piping for return gas, so that for convenience sake, they are hereunder explained collectively.

Each of the adsorption columns 5, 6 and 7 is filled with an adsorbent capable of selective adsorption of $CO_2$. Column 5 is in the stage of adsorption and has been pressurized to a predetermined adsorption pressure. Valve 17 is open and the feed gas that has been pressurized with a compressor 1 passes through this valve and column 5 in which adsorption of $CO_2$ is effected. At the same time, part of the CO and other gases in the feed gas is adsorbed by the adsorbent and the remainder goes out of the other end of the column 5 and flows past the valve 20 into the PSA apparatus for $N_2$ removal which comprises adsorption columns 8 - 11. In this instance, valves 15, 16 18 and 19 are all closed. After the adsorption step has been carried out for a certain period or for a certain volume, valves 17 and 20 are closed and valve 16 opened so that the pressure in the column 5 will be decreased to near-atmospheric pressure.

When near-atmospheric pressure is attained in the column 5, valve 16 is closed and the column is evacuated through valve 15 with a vacuum pump 3 so as to desorb the $CO_2$ component from the adsorbent. Evacuation is typically carried out at a pressure of 10.6 - 16.0 KPa (80 - 120 Torr), preferably at 13.3 KPa (100 Torr). After the evacuation step has been completed, valves 18 and 57 are opened and the exhaust gas from columns 8 - 11 is used as a purge gas for desorbing any residual $CO_2$ from the adsorbent. After this purge step, valves 18, 15 and 57 will be closed.

In the next step, valve 19 is opened and the column 5 is pressurized to the necessary adsorption pressure with the product gas from columns 5 - 7. If pressurization of the product gas is being effected in column 5, the product gas used for pressurization purposes is supplied from column 7 which is in the stage of adsorption. After the pressurizing steps valve 19 is closed.

By cyclically repeating the above procedures in the individual adsorption columns, $CO_2$ in the feed gas can be continuously removed through adsorption on the adsorbent.

The feed gas that has been freed of $CO_2$ in the first stage is then introduced into the second stage (PSA apparatus for $N_2$ removal) in order to remove hydrogen, oxygen and nitrogen and thereby obtain concentrated carbon monoxide. Each of the adsorption columns 8, 9, 10 and 11 used in this second stage is filled with an adsorbent that is capable of selective adsorption of easily adsorbable components (CO and trace $CO_2$ in the case under discussion). After evacuating column 8 with a vacuum pump 4 the gas leaving the PSA apparatus in the first stage is introduced into the column 8 through a valve 33. Valve 66 serves to control the rate of pressurization of column 8. After this pressurization steps valves 34 and 37 are opened while valve 33 is closed to allow the gas leaving the PSA apparatus to be passed through column 8. The readily adsorbable CO and trace $CO_2$ are adsorbed on the adsorbent in column 8 while the other gases pass through the column to fill a buffer tank 12 through valve 58. When the step of purging the PSA apparatus for $CO_2$ removal is started, the gas in the buffer tank 12 is introduced past valve 57 into the columns in the PSA apparatus for $CO_2$ removal. After the adsorption step has been carried out for a certain period or for a certain volumes valves 34 and 37 are closed and valve 38 connecting to column 9 is opened so as to reduce the pressure in column 8 to a predetermined superatmospheric pressure and to have the released gas adsorbed on the adsorbent in the column 9. When a predetermined pressure is attained in the column 8, the valve 38 is closed. Valves 36 and 38 are then opened and a purge gas for displacing the difficult-to-adsorb ($N_2$ and $H_2$) components in the voids in the column 8 is introduced into the column from a product gas buffer tank 13. After passing through column 8 the purge gas flows through valve 38 to be recovered in the adjacent column 9. After the purge steps, valves 36 and 38 are closed and valve 35 opened so that the column 8 is evacuated with pump 4 to desorb the readily adsorbable components from the adsorbent. Evacuation is performed down to a pressure of 13.3 KPa (100 Torr) and the readily adsorbable CO is recovered as the product gas. The recovered gas is fed to a water-filled gas holder 14 from which it is transferred to the product gas buffer tank 13 after it has been pressurized with a compressor 2. Part of the gas in the tank 13 is sent to the PSA apparatus for $N_2$ removal as a purge gas, while the remainder is used as the product gas.

After the evacuation step, valve 35 is closed and then valve 44 on column 9 is opened so that the gas released from column 9 will be adsorbed by column 8. After the depressurization step, valve 44 is closed. This valve will be re-opened when the column 9 is ready for purging and the purge gas from the column 9 will be introduced into the column 8.

By cyclically repeating the above procedures in the individual adsorption columns, the readily adsorbable CO gas can be continuously removed through adsorption on the adsorbent.

According to the method of the present invention, sampling is performed at point A on the feed gas line at the entrance end of the PSA apparatus for $CO_2$ removal and at point B at the exit end of compressor 2, and the composition of the sampled gas is determined with a gas analyzer 60. The concentrations of CO in the two sampled gases, AFf and Ap, are fed into a computing controller 61 which will calculate the amount of return gas $V_R$ to be mixed with the feed gas (in the case shown in Fig. 1) or with the feed gas and/or the product gas from the first stage of purification (in the case shown in Fig. 2 or 3). At the same time, the flow rate of the feed gas and/or the product from the first stage of purification is measured with a flow meter 62 and the resulting signal $V_F$ is also fed into the computing controller 61. The controller 61 performs the necessary arithmetic operation in accordance with Equation (1) or (2) that will be specified later in this specification and as a result of this computation, the necessary amount of product gas will be returned into the feed gas through pipe 64 and/or into the product gas from the first stage of purification through pipe 65. In other words, part of the product gas from the second stage of purification is withdrawn from the product gas line while the necessary amount of this product gas is returned over return gas line 64 or 65, with a control valve 59 being left open. The cumulative amount of the product gas being returned is computed with a return gas flow meter 63 and if a predetermined level is reached, the valve 59 will be closed.

In the embodiment shown in Fig. 1, analysis of gas composition is performed at point A on the feed gas line at the entrance end of the PSA apparatus for $CO_2$ removal and at point B on the product gas line at the exit end of the PSA apparatus for $N_2$ removal. In the embodiments shown in Figs. 2 and 3, analysis of gas composition is also performed at additional point C. In each embodiment, the flow rate of the feed gas or the product gas from the first stage of purification is measured. Based on the measured values of these parameters and using a separately determined mean value of the transfer of feed gas, the amount of product gas to be returned is calculated by Equation (1) or (2) and the so calculated amount of return gas is mixed with the feed gas and/or the product gas from the first stage of purification so as to maintain the concentration of either gas within a preset range. As a consequence, the purity of the product gas can be constantly held at a predetermined level without changing the operating conditions of adsorption columns:

$$V_R = \frac{A_{Fd} - A_{Ff}}{A_P - A_{Fd}} \times V_F \qquad (1)$$

where

$V_R$ : amount of product gas to be returned ($Nm^3/hr$)
$A_{Fd}$ : design concentration of feed gas (% CO)
$A_{Ff}$ : measured concentration of feed gas (% CO)
$A_P$ : purity of gas (% CO)
$V_F$ : mean value of the transfer of feed gas ($Nm^3/hr$).

5

Since the product gas from the first stage of purification is essentially the same as the feed gas except that the former is free of the $CO_2$ content, Equation. (1) can be used for the purpose of concentration control irrespective of whether the return gas is mixed with the feed gas or with the product gas from the first stage of purification.

If, in the case of mixing the return gas with the product gas from the first stage of purification (as in the embodiment of Fig. 2), the flow rate of that product gas ($V_{Fl}$) and the concentration of that gas ($A_{Ffl}$) can be measured continuously, the following Equation. (2) may be employed to attain the same purpose:

$$V_R = \frac{A_{Fd1} - A_{Ff}}{A_P - A_{Fd1}} \times V_{F1} \qquad (2)$$

where

$V_R$     : amount of product gas to be returned (Nm³/hr)
$A_{Fdl}$     : design concentration of product gas from the first stage of purification (% CO)
$A_{Ff}$     : measured concentration of product gas from the first stage of purification (% CO)
$A_P$     : purity of product gas (% CO)
$V_{Fl}$     : mean value of gas transfer in the first stage of purification (% CO).

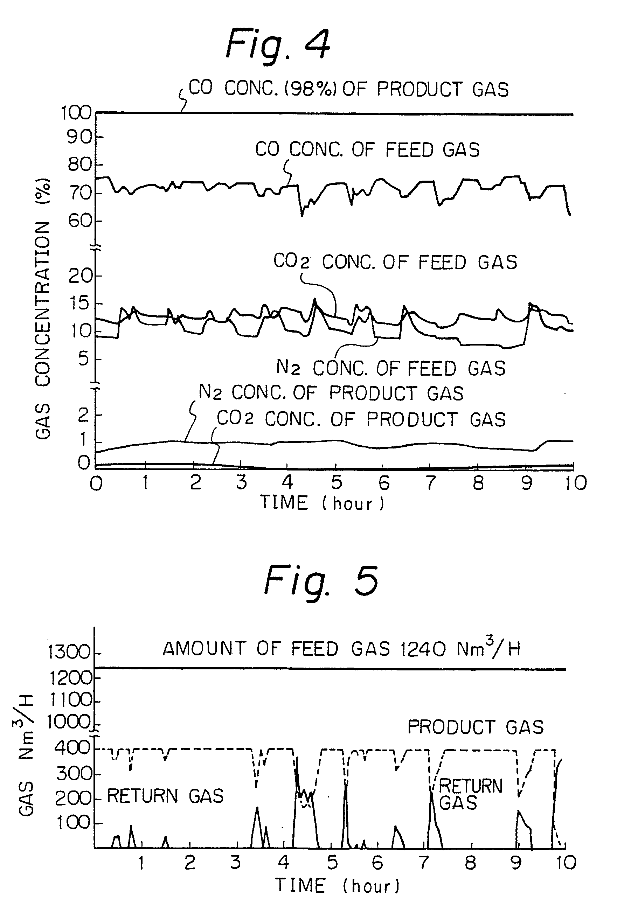

Fig. 4 shows the profile of variation in $A_{Ff}$, $A_P$, $V_R$ and $V_P$ (the amount of product gas) that occurred when the first embodiment of the process of the present invention shown in Fig. 1 was practiced. As one can readily see from Fig. 4, the present invention enabled a feed gas having a design concentration ($A_{Fd}$) of 71% to be purified to yield a product gas having a purity ($A_P$) of 98%. Equal results could be attained by performing the process of the present invention in accordance with its second embodiment shown in Fig. 2 and its third embodiment shown in Fig. 3.

Advantage of the Invention

As will be understood from the foregoing description, the present invention provides an effective method for producing a CO gas of constant purity irrespective of the compositional variation of the feed gas.

**Claims**

1.  A process for separating carbon monoxide with substantially constant purity from a feed gas containing at least carbon dioxide, carbon monoxide and nitrogen through pressure swing adsorption (PSA) in a two-stage adsorption operation which comprises a first adsorption stage and a second adsorption stage wherein:

    (1) the first adsorption stage comprises pressure swing adsorption whereby adsorption and desorption are alternated by using at least two adsorption columns containing an adsorbent exhibiting a selective adsorbing property relative to carbon dioxide in order to remove carbon dioxide from said feed gas; and

    (2) the second adsorption stage comprises a process for separating carbon monoxide from the gaseous mixture which has been withdrawn from the first adsorption stage through PSA by using at least two adsorption columns containing an adsorbent exhibiting a selective adsorbing property relative to carbon monoxide;

    the second adsorption stage repeating at least a step of pressurizing the columns a step of adsorbing carbon monoxide, and a step of desorbing the carbon monoxide, characterized in that the CO concentration in the feed gas, the CO concentration in the effluent gas withdrawn from the first adsorption staged or the CO concentrations in both gases as well as the flowrate of the feed stream or of the effluent stream from the first adsorption stage are monitored, and when the CO concentration in the feed gas or effluent gas decreases below a predetermined amount, part of the CO product gas is circulated into the feed gash the effluent gash or both gases.

2.  The process of Claim 1 wherein part of the CO product gas is circulated into the feed gas or the effluent gas from the first stage when the CO concentration in the feed gas decreases below 70% by volume.

3.  The process of Claim 1 wherein the feed gas is an off-gas from a converter furnace.

EP 0 241 910 B1

4. The process of Claim 1 wherein the feed gas is an off-gas from a blast furnace.

**Revendications**

1. Procédé pour la séparation d'oxyde de carbone d'une pureté sensiblement constante et d'un gaz d'alimentation contenant au moins du gaz carbonique, de l'oxyde de carbone et de l'azote, par adsorption par oscillation de pression (PSA), dans une opération d'adsorption en deux stades qui comprend un premier stade d'adsorption et un second stade d'adsorption où :

(1) le premier stade d'adsorption comprend une adsorption par oscillation de pression où l'adsorption et la désorption alternent en utilisant au moins deux colonnes d'adsorption contenant un adsorbant présentant une propriété d'adsorption sélective relativement au gaz carbonique afin d'éliminer le gaz carbonique du gaz d'alimentation ; et

(2) le second stade d'adsorption comprend un procédé pour la séparation de l'oxyde de carbone et du mélange gazeux qui a été retiré du premier stade d'adsorption par PSA en utilisant au moins deux colonnes d'adsorption contenant un adsorbant présentant une propriété d'adsorption sélective relativement à l'oxyde de carbone ;

Le second stade d'adsorption répétant au moins une étape de pressurisation de la colonne, une étape d'adsorption de l'oxyde de carbone et une étape de désorption de l'oxyde de carbone, caractérisé en ce que la concentration en CO dans le gaz d'alimentation, la concentration en CO dans le gaz effluent retiré du premier stade d'adsorption ou les concentrations en CO dans les deux gaz ainsi que le débit du courant d'alimentation ou du courant effluent du premier stade d'adsorption sont surveillés et quand la concentration en CO dans le gaz d'alimentation ou le gaz effluent diminue en dessous d'une quantité prédéterminée, une partie du CO gazeux produit est remise en circulation dans le gaz d'alimentation, le gaz effluent ou les deux.

2. Procédé de la revendication 1 où une partie du CO gazeux produit est mise en circulation dans le gaz d'alimentation ou le gaz effluent du premier stade quand la concentration en CO dans le gaz d'alimentation diminue en dessous de 70% en volume.

3. Procédé de la revendication 1 où le gaz d'alimentation est un gaz d'échappement d'un four de convertisseur.

4. Procédé de la revendication 1 où le gaz d'alimentation est un gaz d'échappement d'un haut fourneau.

**Patentansprüche**

1. Verfahren zum Abtrennen von Kohlenmonoxid mit praktisch konstanter Reinheit aus einem Speisegas mit zumindest Kohlendioxid, Kohlenmonoxid und Stickstoff durch Druckwechseladsorption (PSA) bei einem zweistufigen Adsorptionsbetrieb mit einer ersten Adsorptionsstufe und einer zweiten Adsorptionsstufe, wobei

(1) in der ersten Adsorptionsstufe eine Druckwechseladsorption mit abwechselnder Adsorption und Desorption unter Verwendung von mindestens zwei Adsorptionssäulen mit einem Adsorptionsmittel mit selektiver Adsorptionsfähigkeit bezüglich Kohlendioxid zur Entfernung von Kohlendioxid aus dem Speisegas durchgeführt wird, und

(2) in der zweiten Adsorptionsstufe Kohlenmonoxid durch PSA unter Verwendung von mindestens zwei Adsorptionssäulen mit einem Adsorptionsmittel mit selektiver Adsorptionsfähigkeit bezüglich Kohlenmonoxid dieses aus dem aus der ersten Adsorptionsstufe abgezogenen gasförmigen Gemisch abgetrennt wird, wobei in der zweiten Adsorptionsstufe mindestens eine Stufe des Unterdrucksetzens der Säule, eine Stufe der Adsorption von Kohlenmonoxid und eine Stufe der Desorption des Kohlenmonoxids wiederholt werden, dadurch gekennzeichnet, daß die CO-Konzentration in dem Speisegas, die CO-Konzentration in dem aus der ersten Adsorptionsstufe abgezogenen Gasabstrom oder die CO-Konzentration in beiden Gasen sowie die Strömungsgeschwindigkeit des Speisegasstroms oder des Abstroms aus der ersten Adsorptionsstufe überwacht werden, wobei beim Absinken der CO-Konzentration in dem Speisegas oder dem Gasabstrom unter einen gegebenen Wert ein Teil des CO-Produktgases in das Speisegas, den Gasabstrom oder beide Gase rückgeführt wird.

2. Verfahren nach Anspruch 1, dadurch gekennzeichnet, daß ein Teil des CO-Produktgases in das

7

Speisegas oder den Gasabstrom aus der ersten Stufe rückgeführt wird, wenn die CO-Konzentration im Speisegas unter 70 Vol.-% sinkt.

3. Verfahren nach Anspruch 1, dadurch gekennzeichnet, daß es sich bei dem Speisegas um ein Abgas aus einem Konverterofen handelt.

4. Verfahren nach Anspruch 1, dadurch gekennzeichnet, daß es sich bei dem Speisegas um ein Abgas aus einem Hochofen handelt.

Fig. 1

SYSTEM REMOVING CO₂    SYSTEM RECOVERING CO (REMOVING N₂)

Fig. 2

SYSTEM REMOVING CO₂   SYSTEM RECOVERING CO
(REMOVING N₂)

5-11···ADSORPTION COLUMN
12-13···BUFFER TANK

*Fig.3*

SYSTEM REMOVING CO₂    SYSTEM RECOVERING CO (REMOVING N₂)

5-11···ADSORPTION COLUMN
12-13···BUFFER TANK

## Fig. 4

CO CONC. (98%) OF PRODUCT GAS

CO CONC. OF FEED GAS

CO₂ CONC. OF FEED GAS

N₂ CONC. OF FEED GAS

N₂ CONC. OF PRODUCT GAS

CO₂ CONC. OF PRODUCT GAS

GAS CONCENTRATION (%)

TIME (hour)

## Fig. 5

AMOUNT OF FEED GAS 1240 Nm³/H

PRODUCT GAS

RETURN GAS

RETURN GAS

GAS Nm³/H

TIME (hour)